Europäisches Patentamt

European Patent Office

Office européen des brevets

(19)

(11) Veröffentlichungsnummer: **0 152 602**
**B1**

(12) **EUROPÄISCHE PATENTSCHRIFT**

(45) Veröffentlichungstag der Patentschrift:
22.07.87

(51) Int. Cl.⁴: **B 60 T 8/66**

(21) Anmeldenummer: 84115520.3

(22) Anmeldetag: 15.12.84

(54) Verfahren zur Ermittlung eines optimalen Schlupfwerts.

(30) Priorität: 16.12.83 DE 3345546

(43) Veröffentlichungstag der Anmeldung:
28.08.85 Patentblatt 85/35

(45) Bekanntmachung des Hinweises auf die Patenterteilung:
22.07.87 Patentblatt 87/30

(84) Benannte Vertragsstaaten:
DE FR GB IT SE

(56) Entgegenhaltungen:
EP-A-0 147 754
EP-A-0 149 901
DE-A-2 748 863
FR-A-1 407 168
US-A-3 235 036

PATENTS ABSTRACTS OF JAPAN, Band 6, Nr. 17
(M-109) 895 , 30. Januar 1982;
PATENTS ABSTRACTS OF JAPAN, Band 6, Nr. 153
(M-149) 1031 , 13. August 1982; & JP - A - 57 70758
(HITACHI SEISAKUSHO K.K.) 01.05.1982

(73) Patentinhaber: ROBERT BOSCH GMBH, Postfach
50, D-7000 Stuttgart 1 (DE)

(72) Erfinder: van Zanten, Anton, Dr.- Ing.,
Waldstrasse 15/2, D-7257 Ditzingen 1 (DE)
Erfinder: Heess, Gerhard, Dr.- Ing., Stuttgarter
Strasse 90, D-7146 Tamm (DE)

(74) Vertreter: Kammer, Arno, Dipl.- Ing., ROBERT
BOSCH GmbH Zentralabteilung Patente
Postfach 50, D-7000 Stuttgart 1 (DE)

EP 0 152 602 B1

## Beschreibung

Die Erfindung betrifft ein Verfahren zur Ermittlung eines optimalen Schlupfwertes $\lambda$ an wenigstens einem Rad eines Fahrzeugs zur Bremskraftregelung unter Verwendung von von der Radgeschwindigkeit $V_R$ und der Fahrzeuggeschwindigkeit $V_F$ wenigstens angenähert abhängigen Signalen $V_R^*$; $V_F^*$.

Bei ABS-Bremsungen wird am geregelten Rad der Druck im Radbremszylinder so geregelt, daß der Reifenschlupf sich möglichst im Bereich des maximalen Bremskraftschlußbeiwertes befindet. Voraussetzung für eine gute ABS-Regelung ist also eine gute Abschätzung dieses Maximums. Im allgemeinen wird dazu hauptsächlich die Radbeschleunigung beobachtet.

Hiervon unterscheidet sich die Erfindung gemäß Patentanspruch 1 dadurch, daß durch Messungen und gegebenenfalls Abschätzungen von "Meßwerten" und mit Hilfe von mathematischen Ersatzmodellen die $\mu$-Schlupfkurve laufend ermittelt wird. Bei Bekanntsein des Kurvenverlaufs dieser Kurve ist auch die Lage deren Maximums bekannt und der Wert für den Sollschlupf kann dann in Abhängigkeit von der Lage dieses Maximums eventuell unter Berücksichtigung weiterer Parameter bestimmt werden. So ist es z. B. möglich, bei Geradeausfahrt den Sollschlupf um einen bestimmten kleinen Betrag oder Prozentsatz unterhalb des Maximums zu legen und diesen Betrag oder Prozentsatz bei Kurvenfahrt zu Erhöhung der Seitenführung zu erhöhen.

Bei der Erfindung handelt es sich um die Anwendung der Identifizierungsmethodik zur Ermittlung der Schlupfkurve. Diese Methodik beruht auf Messungen und mathematischen Ersatzmodellen von physikalischen Prozessen. Die mathematischen Ersatzmodelle beschreiben hier
1. das Rad unter Einwirkung von Bremsmoment und Bremskraft,
2. den Reifen als Schlupfkurve,
3. den Radbremszylinder unter Einfluß vom Druck im Hauptbremszylinder und Schaltventilstellungen, und
4. das Fahrzeug, das durch die Bremskräfte verzögert wird.

Gemessen wird der Druck im Hauptbremszylinder und die Radgeschwindigkeit. Eine Verbesserung und Vereinfachung der Identifizierung ist erzielbar, wenn der Druck im Radbremszylinder und die Fahrzeuggeschwindigkeit gemessen werden könnten. Weiter können die vom Regler gesteuerten Schaltventilsignale zur Berechnung des Bremsdrucks im Radbremszylinder herangezogen werden. Die Identifizierung liefert nun aufgrund der Messungen und der mathematischen Modelle Parameterwerte, aus denen die Kennwerte der Schlupfkurve - und somit die Schlupfkurve selbst - bestimmt werden können.

Im folgenden werden die mathematischen Modelle, die Identifizierungsmethodik und die Aufbereitung (Filterung) der Meßsignale beschrieben. Anhand der Algorithmen kann ein Rechner (Mikrocomputer) programmiert werden, um so die Schlupfkurve zu bestimmen. Eine beispielhafte Berechnung schließt diese Beschreibung ab.

## System Bremse-Rad-Reifen

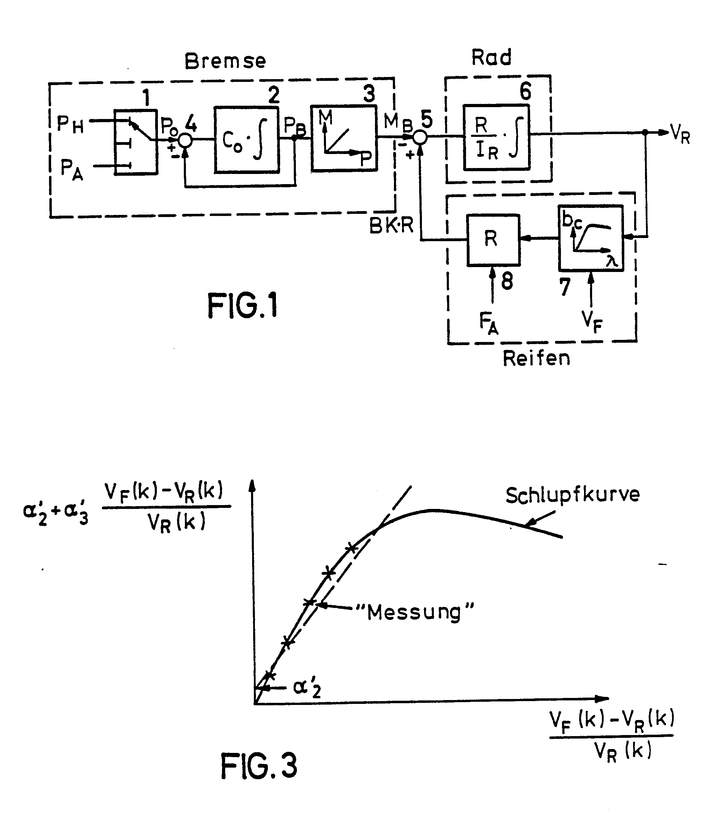

Das mathematische Ersatzmodell für dieses System ist in Abb. 1 skizziert.

Das Schaltventil 1 wird vom ABS-Regler gesteuert. In der gezeichneten Stellung wird der Radbremszylinder 2 mit dem Hauptbremszylinder verbunden und der Druck im Radbremszylinder 2 wird aufgebaut. In der Mittelstellung ist die Leitung zum Radbremszylinder unterbrochen und der Bremsdruck im Radbremszylinder bleibt konstant. In der unteren Stellung ist der Radbremszylinder mit der Rückführleitung verbunden und der Druck im Radbremszylinder wird abgebaut. Die Bremsscheibe oder Bremstrommel 3 setzt den Radbremszylinderdruck $P_B$ in ein Bremsmoment $M_B$ um. Das mathematische Modell des Radbremszylinders ist

$$P_B - C_o (P_o - P_B)$$

wobei $P_o$ der angelegte Druck und $C_o$ eine Konstante ist.

Es ist demnach ein System erster Ordnung (linear). Das Bremsmoment $M_B$ wirkt auf das Rad 6 und aus der Integration folgt die Radgeschwindigkeit $V_R$. Eine Gegenkopplung wird über den Reifen 7,8 erreicht und das Moment BK.R vom Bremsmoment abgezogen. Die Bremskraft BK entsteht, aus dem Produkt von Bremskraftschlußbeiwert $b_c$ und Reifenaufstandskraft $F_A$. Der Bremskraftschlußbeiwert $b_c$ wird mittels des Reifenmodells 7 aus der Radgeschwindigkeit $V_R$ und der Fahrzeuggeschwindigkeit $V_F$ berechnet. Die Reifenaufstandskraft $F_A$ und die Fahrzeuggeschwindigkeit werden aus dem Fahrzeugmodell berechnet. Das mathematische Modell des Rades ist

$$V_R = \frac{BK.R^2 - M_b.R}{I_R}$$

wobei
$R$ = Reifenradius und
$I_R$ = Rad + Reifen-Drehträgheitsmoment ist.

Durch die nichtlineare Bremskraft ist dies eine nichtlineare Differentialgleichung und die Identifizierung demnach eine nichtlineare Identifizierung.

Der Bremskraftschlußbeiwert $b_c$ wird wie folgt modelliert:

$$b_c = \varepsilon \frac{\lambda}{1-\lambda} \text{ wenn } \bar{s} < 0.5$$

$$bc = \mu \left\{ 1 - \frac{\mu(1-\lambda)}{4\varepsilon\lambda} \right\} \text{ wenn } \bar{s} > 0.5$$

wobei $\lambda$ = Reifenschlupf = $\frac{V_f - V_R}{V_f}$

$\varepsilon$ = Reifenkonstante

$\mu = \mu_0 (1 + A_\lambda V_\lambda)$

$\mu_0$ = Reibbeiwert Reifen/Fahrbahnkombination

$A_\lambda$ = Gummikonstante

$V_\lambda = \lambda . V_F$ = Schleifgeschwindigkeit

$\bar{s} = \frac{\lambda}{\mu(1-\lambda)}$ ist.

Aus diesem Modell folgt, daß die Nichtlinearität $b_c(\lambda)$ trägheitslos ist. Die nichtlineare Identifizierung kann deshalb mit den Methoden der linearen Identifizierung durchgeführt werden. Dazu wird das Reifenmodell wie folgt geschrieben:

$$b_c = \varepsilon \frac{V_f - V_R}{V_R} \text{ wenn } \bar{s} < 0.5$$

$$bc = \mu o + \mu o A_\lambda (V_F - V_R) - \frac{\mu o^2}{4\varepsilon} \frac{V_f}{V_f - V_R} - \frac{\mu o^2 A_\lambda}{2\varepsilon} V_R$$

$$- \frac{\mu o^2 A\lambda}{4\varepsilon} \left\{ V_R (V_F - V_R) \right\} \text{ wenn } \bar{s} > 0.5$$

Simulationen haben gezeigt, daß die ersten 3 Terme bei s > 0.5 für den interessanten Bereich um das Maximum der Schlupfkurve ausreichen.

Für den Identifizierungsalgorithmus werden nun folgende Formeln eingesetzt:

$$b_c = a_0 \frac{1}{V_R} (V_F - V_R) \text{ wenn } \bar{s} < 0.5$$

$$b_c = a_1 + a_2 (V_F - V_R) + a_3 \frac{V_f}{V_f - V_R} \text{ wenn } \bar{s} > 0.5 \text{ ist.}$$

wobei die Parameter $a_0 ... a_3$ von der Identifizierung bestimmt werden, und diese wie folgt lauten:

$a_0 = \varepsilon$

$a_1 = \mu_0$

$a_2 = \mu_0 A_\lambda$

$a_3 = - \frac{\mu o^2}{4\varepsilon}$

## Identifizierungsalgorithmus

Bei dem Algorithmus wird von der diskreten Lösung der Differentialgleichung des Rads ausgegangen

$$V_R k + 1 = \alpha_{1>1'} V_R(K) + \alpha_2 F_A(K) \frac{V_f(K) - V_R(K)}{V_R(K)} \Delta T$$

$$+ \alpha_3' P_B(K) . \frac{R \cdot \Delta T}{I_R} \text{ wenn } \bar{s} < 0.5$$

$$V_R(k+1) = \alpha_1 V_R(K) + [\alpha_2 + \alpha_3 \{V_F(K) - V_R(K)\}] F_A(K) \cdot \Delta T$$

$$+ \alpha_4 \frac{V_f(K) F_A(K) \cdot \Delta T}{V_f(K) - V_R(K)} + \alpha_5 P_B(K) . \frac{R \cdot \Delta T}{I_R} \text{ wenn } \bar{s} > 0.5$$

$\alpha_1 - \alpha_5$ sind abzuschätzende Koeffizienten.

Die Werte von $V_R(K)$, $V_F(K)$, $P_B(K)$ und $F_A(K)$ werden durch Filterung aus Messungen gewonnen. Diese Filterung wird später beschrieben. Die Identifizierung erfolgt iterativ und rekursiv. Der Zähler K zählt dabei die Rekursionsschritte. Die Zeit zwischen den Iterationen ist $\Delta T$ und konstant. Es gilt also, daß $V_R(K+1)$ die Radgeschwindigkeit zum Zeitpunkt $t = (K+1) . \Delta T$ ist.

Im folgenden wird anhand der zweiten Gleichung ($\bar{s} > 0.5$) der Algorithmus beispielhaft beschrieben. Für den Fall s < 0.5 verläuft der Algorithmus in ganz ähnlicher Weise. Der Algorithmusübergang von der ersten in der zweiten Gleichung und umgekehrt wird später beschrieben.

Setzt man

3

$$A_1 = V_R(K)$$

$$A_2 = F_A(K).\Delta T$$

$$A_3 = F_A(K).\Delta T. \{V_F(K)-V_R(K)\}$$

$$A_4 = F_A(K)-\Delta T.\frac{V_F(K)}{V_F(K)-V_R(K)}$$

$$A_5 = P_B(K).R.\Delta T/I_R$$

und betrachtet man $A_1 ... A_5$ und $\alpha_1 ... \alpha_5$ als Vektoren, so gilt:

$$V_R(K+1) = \underline{A}(K).\underline{\alpha} + v(K)$$

wobei $v(K)$ wegen Meßrauschens und Modellfehler den Fehler zwischen der Vorhersage $\underline{A}(K).\underline{\alpha}$ und der "Messung" $V_R(K+1)$ ausgleicht.
Bei der Identifizierung wird die Summe der Fehlerquadrate

$$\sum_{i=1}^{k} v(i)^2$$

minimiert.

Zur Lösung dieses Problems wurden verschiedene Methoden, z. B. Rekursive Maximum Likelihood, Modellreferenzmethode, Kalmanschätzung und Quadratwurzelschätzung angesetzt. Diese und andere Methoden sind anwendbar und haben ihre spezifischen Vor- und Nachteile. Besonders die Leiter-Algorithmen (Engl. "Ladder Algorithms") scheinen erfolgversprechend, da sie schnelle Parameteränderungen folgen können.

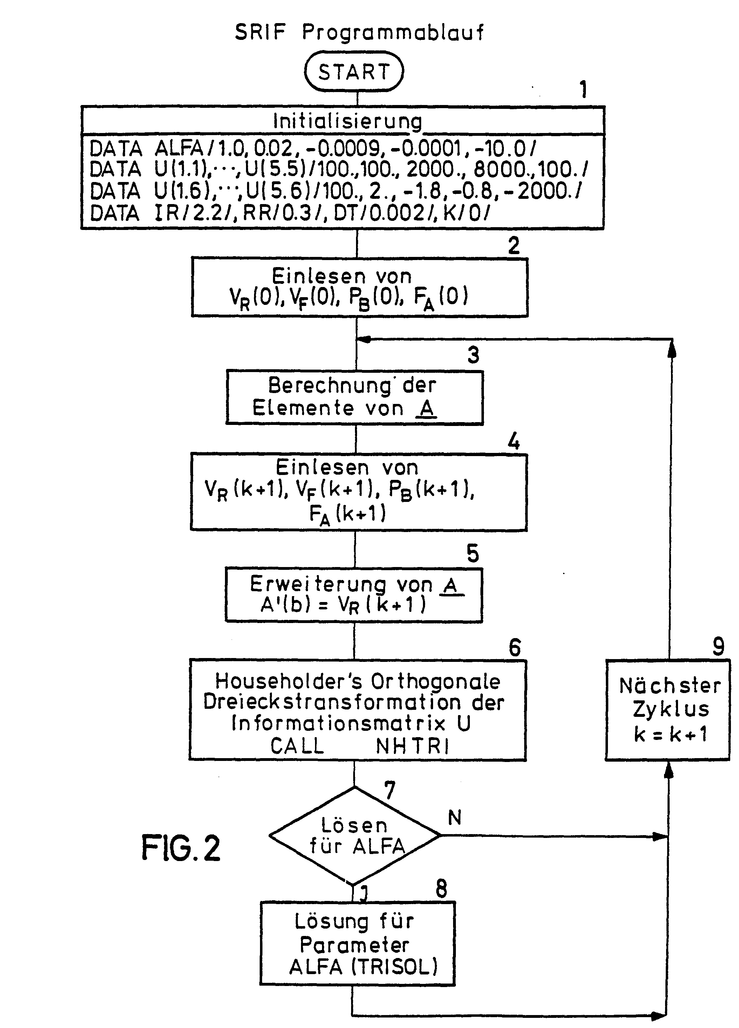

Im Folgenden wird die Quadratwurzelmethode beispielhaft eingesetzt (siehe Bierman: Square Root Information Filter, oder kurz SRIF). Dieser Methode ist hier der Vorzug gegeben, weil bei dieser Methode die Korrekturen in den Parameterwerten $\alpha_i$, i = 1-5, pro Iteration gewichtet werden können. Parameter von denen man a priori weiß, daß sie sich nur wenig ändern, werden anders gewichtet als Parameter von denen man weiß, daß sie sich stark ändern können. Ein weiterer Vorteil der SRIF-Methode ist, daß eine Residu-Analyse einfacher ist, als bei anderen Methoden. Dies ist wichtig, wenn entschieden werden muß, ob der Radschlupf im linearen oder im nichtlinearen Bereich der Schlupfkurve liegt oder ob schnelle Parameteränderungen vorliegen. Ein ganz wesentliches Merkmal der SRIF-Methode ist die Genauigkeit der Parameterbestimmung und die Stabilität des Algorithmus. Der Algorithmus benutzt Householder-Orthogonale Transformationen zur Transformation von der Informationsmatrix $\Sigma A^T(i) \underline{A}(i)$ zu einer Dreiecksmatrix. Danach ist die Lösung für $\underline{\alpha}$ schnell und unproblematisch durchführbar. Die Routinen zur Dreieckstransformation (HHTRI) und zur Lösung für $\underline{\alpha}$ sind im Anhang beispielhaft gegeben. Der Algorithmus ist in Abb. 2 als Blockschaltbild skizziert. Der Vektor $\underline{A}'$ wird für K = o initialisiert mit $\underline{A}'(o)$, die eine Abschätzung der Parameterwerte ist. Zu bemerken ist, daß A' der um den "Meßwert" $V_R(K+1)$ erweiterte Vektor $\underline{A}$ ist, d.h. $A'_1 = A_1$, $A'_2 = A_2$, ... $A'_5 = A_5$, $A_6 = V_R(K+1)$. Der Dreiecksmatrix U, welcher in HHTRI berechnet wird, wird initialisiert mit $U_o$. Diese Matrix $U_o$ wird als diagonale Matrix gewählt, wobei die Werte $U_{ojj}$, j = 1,5 so gewählt werden, daß die einzelnen Parameter geeignet gewertet werden. Auf dieser Weise kann die Gewichtung der einzelnen Parameteränderungen, wovon vorher schon die Rede war, vorgenommen werden.

In Abb. 2 wird in 1 das Programm initialisiert. In Zeile 1 werden Schätzwerte für die Parameter $\alpha_1 ... \alpha_5$ angegeben. In der 2. Zeile wird die oben erwähnte Gewichtung angesetzt. In der 3. Zeile wird das Produkt der 1. und der 2. Zeile angegeben. Dies sind dann Schätzwerte der Messungen. In der 4. Reihe wird die Radträgheit (IR), der Reifenradius (RR), der Zeitzyklus ($\Delta T$) und der Zeitzähler (K) vorbesetzt. In 2 werden Anfangswerte für die Radgeschwindigkeit ($V_R$), die Fahrzeuggeschwindigkeit ($V_F$), den Druck im Radbremszylinder $p_B$ und die Radaufstandskraft ($F_A$) eingelesen. In 3 werden neue Werte von A(1) bis A(5) berechnet. In 4 werden neue Werte für $V_R$, $V_F$, $P_B$ und $F_A$ vom bereits erwähnten Filter bezogen und der neue gefilterte Wert der Radgeschwindigkeit $V_R$ in 5 an dem Vektor $\underline{A}$ angehängt. Mit der Informationsmatrix U und dem "Meßvektor" $\underline{A}'$ wird in 6 die orthogonale Transformation durchgeführt. Nach der Dreiecksumbildung von U ist dieser Matrix bereits in der Form in dem die Routine HHTRI ihn braucht. In 7 kann entschieden werden, ob die neuen Parameterwerte $\alpha_1 ... \alpha_5$ errechnet werden sollten oder ob die nächsten "Meßwerte" sofort verarbeitet werden sollten. In 8 wird die Routine TRISOL aufgerufen für die Berechnung von $\alpha_1 ... \alpha_5$. Für den nächsten Iterationszyklus wird der Zeitzähler inkrementiert und die Berechnung von $\underline{A}$ in 3 startet den neuen Zyklus.

Schon laufende Regelung unterstellt, werden laufend die Größen $V_R(K)$, $V_F(K)$, PB(K) und FA(K) gemessen bzw. ermittelt und in den Rechner eingegeben. Durch Kombination mit Vorinformation der vorhergehenden Meß- und Rechenzyklen wird eine weitere Minimierung der Fehlerquadrate durchgeführt, wodurch eine verbesserte Abschätzung der Koeffizienten $\alpha_n$ möglich wird. Aus diesen $\alpha_n$ können die Koeffizienten $a_n$ der $\mu$-

Schlupfkurve nach folgenden Beziehungen ermittelt werden:

$$a_0 = \alpha'_2 \tfrac{l_R}{R^2}$$

$$a_1 = \alpha_2 \tfrac{l_R}{R^2}$$

$$a_2 = \alpha_3 \tfrac{l_R}{R^2}$$

$$a_3 = \alpha_4 \tfrac{l_R}{R^2}$$

Aus den berechneten Werten von $\alpha_n$ und $a_n$ kann nun die Schlupfkurve bestimmt werden sowie die Werte

$$\mu_0 - \alpha_2 \cdot l_R/R^2$$

$$A_\lambda = \alpha_3/\alpha_2$$

$$\varepsilon - -\alpha_2\mu_0/(4.\alpha_4)$$

Bei bekannter $\mu$-Schlupfkurve kann dann $\lambda$ optimal festgelegt werden.

## Umschaltung des Algorithmus in die zwei s-Bereiche

Wie bereits beschrieben, wird die Schlupfkurve in zwei Bereiche unterteilt: ein fast linearer Bereich ($\bar{s} < 0.5$) und ein nichtlinearer Bereich ($\bar{s} > 0.5$).

Wenn der Radschlupf sich im linearen Bereich befindet, können $A_\lambda$ und $\mu_0$ nicht abgeschätzt werden. Damit kann im linearen Bereich $\bar{s}$ nicht berechnet werden. Wenn der Radschlupf sich im nichtlinearen Bereich befindet, so können $\mu_0$, $A_\lambda$ und $\varepsilon$ abgeschätzt werden und $\bar{s}$ aus diesen Werten berechnet werden. Sinkt der Radschlupf aus dem nichtlinearen Bereich unterhalb $\bar{s} = 0.5$ dann wird umgeschaltet auf den linearen Algorithmus.

Für die Umschaltung vom linearen Algorithmus auf den nichtlinearen Algorithmus können einige Kriterien benutzt werden.

1. Es wird folgender Ansatz benutzt

$$V_R(K+1) = \alpha_1'.V_R(K) + [\alpha_2' + \alpha_3' \tfrac{V_F(K)-V_R(K)}{V_R(K)}] F_A(K)-\Delta$$

$$+ \alpha_4'.P_B(K).\tfrac{R.\Delta T}{l_R}$$

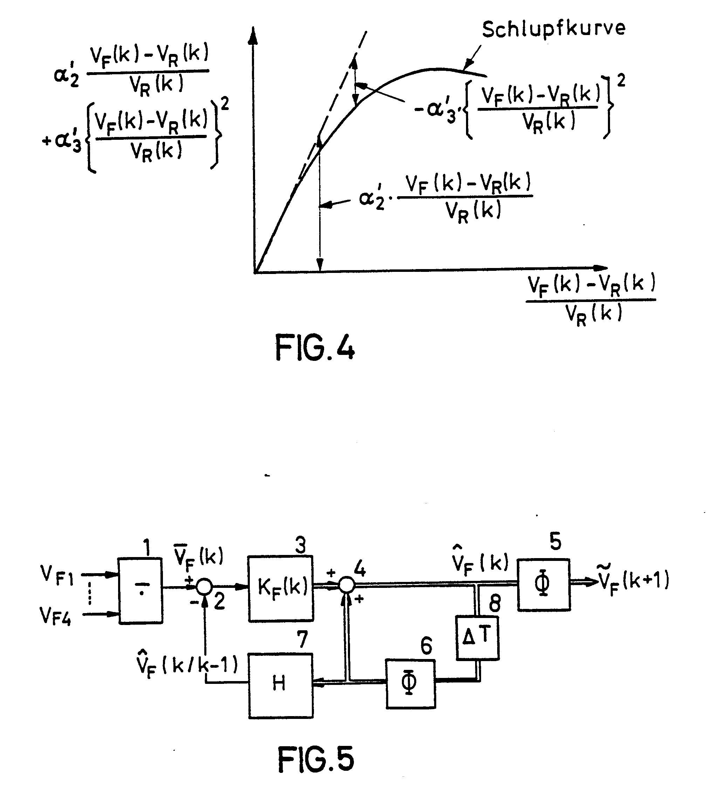

und der Wert von $\alpha_2'$ relativ zum Wert von $\alpha_3 \tfrac{V_F(K)-V_R(K)}{V_R(K)}$ beobachtet. Überschreitet z. B. $\alpha_2'$ den Wert von $0,1.\alpha_3 \cdot \tfrac{V_F(K)-V_R(K)}{V_R(K)}$, so wird auf den nichtlinearen Algorithmus umgeschaltet. Siehe Abb. 3.

2. Es wird folgender Ansatz benutzt

$$V_R(K+1) = \alpha_1' - V_R(K) + [\alpha_2' \tfrac{V_F(K)-V_R(K)}{V_R(K)} + \alpha_3' \tfrac{(V_F(K)-V_R(K))}{V_R(K)}{}^2] F_A(K)$$

$$+ \alpha_4'.P_B(K).\tfrac{R.\Delta T}{l_R}$$

und der Wert von $\alpha_3' (\tfrac{V_F(K)-V_R(K)}{V_R(K)})^2$ relativ zum Wert von

$\alpha_2' \tfrac{V_F(K)-V_R(K)}{V_R(K)}$ beobachtet. Überschreitet z.B.

$\alpha_3' \cdot (\tfrac{V_F(K)-V_R(K)}{V_R(K)})^2$ der Wert von $0,1 . \alpha_2' . \tfrac{V_F(K)-V_R(K)}{V_R(K)}$, so wird auf den nichtlinearen Algorithmus umgeschaltet. Siehe Abb. 4:

3. Es wird eine Residual-Analyse durchgeführt. Die SRIF-Methode liefert nach jeder Schleife den minimalen Fehler (Residual) der Kurve (Linie) von der Messung. Wird mit zunehmendem Schlupf dieser Residual immer größer und übersteigt er einen Schwellwert, dann wird umgeschaltet auf den nichtlinearen Algorithmus.

Zum Schluß sei noch zu bemerken, daß am Anfang der Bremsung der Schlupf sich im linearen Bereich befindet und daß deshalb die Identifizierung mit dem linearen Algorithmus anfängt.

Es ist auch möglich, die Funktion $V_R(K+1)$ gemäß folgendem Ansatz zu formulieren:

$$V_R(k+1) = \alpha_1.V_R(K) + [\alpha_2 + \alpha_3. \{V_F(K)-V_R(K)\}]F_A(K).\Delta T +$$

$$+ \alpha_4 \tfrac{V_F(K)}{V_F(K)-C.V_R(K)}F_A(K)-\Delta T + \alpha_5-P_B(K) \tfrac{R.\Delta T}{l_R}$$

Hierin ist C geschickt zu wählen (z.B. 0.98). Bei diesem Ansatz fällt die Zweiteilung (für $\bar{s} >$ bzw. $\bar{s} <$) weg.

Hier wird dann auch die μ-Schlupfkurve $b_c$ durch einen Ausdruck approximiert:

$$b_c = a_1 + a_2 \cdot (V_F - V_R) + a_3 \frac{V_F}{V_F - C \cdot V_R} \text{ für alle } \bar{s}.$$

Der Faktor C wird so gewählt, daß bei kleinen Schlupfwerten die letzte Approximation nur wenig von der ersten Approximation abweicht. Zum Beispiel wird der Faktor $C = 0.98$ genommen.

Das Vorgehen ist das gleiche wie oben, jedoch entfällt nun die Notwendigkeit des Erkennens des Überschreitens des Maximums. Die Koeffizienten $a_n$ ergeben sich aus den Koeffizienten $\alpha_n$ wie folgt:

$$a_1 = \alpha_2 \frac{IR}{R}$$

$$a_2 = \alpha_3 \frac{IR}{R}$$

$$a_3 = \alpha_4 \frac{IR}{R}$$

## Messungen

Sind die Meßwerte für $V_R$, $V_F$ und $P_B$ rauschbehaftet oder sind Meßwerte für $V_F$ und $P_B$ erst garnicht vorhanden, so werden die in einem Kalman Filter abgeschätzt. Auf jedem Fall muß aber die Radgeschwindigkeit gemessen werden. Wenn die Fahrzeuggeschwindigkeit nicht gemessen wird, kann $V_F$ aus der Schlupfkurve abgeschätzt und in dem Kalman Filter gefiltert werden. Wenn der Druck im Radbremszylinder nicht gemessen wird, so muß $p_H$, d.h. der Druck im Hauptbremszylinder gemessen werden und der Druck, mit dem die Bremsflüssigkeit zur Rückförderpumpe fließt, bekannt sein.

## Abschätzung von $V_F$

Nachdem die Identifizierung mit der Messung $V_R(K+1)$ neue Werte für die Parameter der Schlupfkurve geliefert hat, wird $V_F$ als a postoriori Wert wie folgt ausgerechnet:

$$\bar{s} < 0.5 : V_F K = V_R(K) + \frac{V_R(K) \mid V_R(K+1) - \alpha' \cdot V_R(K) \mid}{\alpha_1}$$

$$\bar{s} > 0,5: \quad V_F(K) = V_R(K) + \frac{-(\alpha_2 - x) \pm \sqrt{(\alpha_2 - x)^2 - 4\alpha_3\alpha_4 \; V_R(K)}}{2 \cdot \alpha_3}$$

wobei $x = \frac{\alpha_2 A(2) + \alpha_3 A(3) + \alpha_4 A(4)}{F_x(K) \cdot \Delta T}$ ist.

Das Vorzeichen vor der Quadratwurzel ist positiv, wenn

$\mu_x) - \mu_x(K-1) > 0$ und negativ, wenn $\mu_x(K) - \mu_x(K-1) < 0$

wobei $\mu_x(K) = \alpha_2 + \alpha_3 \{\bar{V}_F(K) - V_R(K)\} + \alpha_4 \frac{V_F(K)}{V_F(K) - V_R(K)}$

wobei $\check{V}_F(K)$ die vom Kalman Filter vorausgesagte Fahrzeuggeschwindigkeit ist.

Für jede identifizierte Schlupfkurve erhält man so eine Schätzung der Fahrzeuggeschwindigkeit bei 4 Rädern also $V_{F1}, ..., V_{F4}$. Diese vier Werte werden nun nach Mittelung

$$\check{V}_F V = \left(\frac{V_{F1} + V_{F2} + V_{F3} + V_{F4}}{4}\right)K$$

dem Kalman Filter für die Fahrzeuggeschwindigkeit zugeführt (Abb. 5).

Das Kalman Filter für die Fahrzeuggeschwindigkeit beruht auf folgenden Differentialgleichungen

$$\dot{V}_F = b$$

$$\dot{b} = w$$

wobei b die Fahrzeugverzögerung, und w weißes Rauschen ist.

Die diskrete Lösung dieser Differentialgleichungen lautet:

$$\left| \begin{array}{c} V_F(K+1) \\ \\ b\ (K+1) \end{array} \right| = \Phi \left| \begin{array}{c} V_F(K) \\ \\ b\ (K) \end{array} \right| + \Gamma \cdot w$$

wobei die Transitionsmatrix $\Phi = \left| \begin{array}{cc} 1 & \Delta T \\ \\ 0 & 1 \end{array} \right|$ und

der Rauschtransitionsvektor $\Gamma = \left| \begin{array}{c} \dfrac{1}{2}\ \Delta T^2 \\ \\ \Delta T \end{array} \right|$ ist.

Die Gleichung für die Messung ist:

$$V_F(K+1) = H \cdot \begin{array}{c} V_F(K+1) \\ \\ b(K+1) \end{array} + \nu$$

wobei der Meßvektor $H = [1\ 0]$ und $\nu$ weißes Meßrauschen ist.

Das Kalman Filter für die Fahrzeuggeschwindigkeit ist in Abb. 5 gezeichnet. In 1 werden die vier Fahrzeuggeschwindigkeiten $V_{F1} \ldots V_{F4}$ gemittelt. In 2 wird von diesem mittleren Wert der vorausgesagte Wert $\hat{V}_F(K \mid K\text{-}1)$ abgezogen und die Differenz in 3 mit dem Kalman Verstärkungsvektor $K_F(K)$ multipliziert. Die Korrektur am Ausgang von 3 wird zu der Vorhersage des Zustands am Ausgang von 6 in 4 addiert. Die Summe ist der gefilterte Zustand, angedeutet mit $V_F(K)$. In 5 wird der gefilterte Zustand mit den Transitionmatrix multipliziert und der vorhergesagte Zustand, angedeutet mit $V_F(K\text{-}1)$ steht am Ausgang von 5 zur Verfügung. Für den nächsten Filterzyklus wird der gefilterte Zustand in 8 um einen Taktzyklus verzögert und in 6 mit dem Transitionsmatrizen multipliziert. In 7 wird dieser Ausgang von 6 mit dem Meßvektor H multipliziert und am Ausgang von 7 steht nun die Vorhersage des neuen Mittelwertes $\hat{V}_F(K \mid K\text{-}1)$ zur Verfügung.

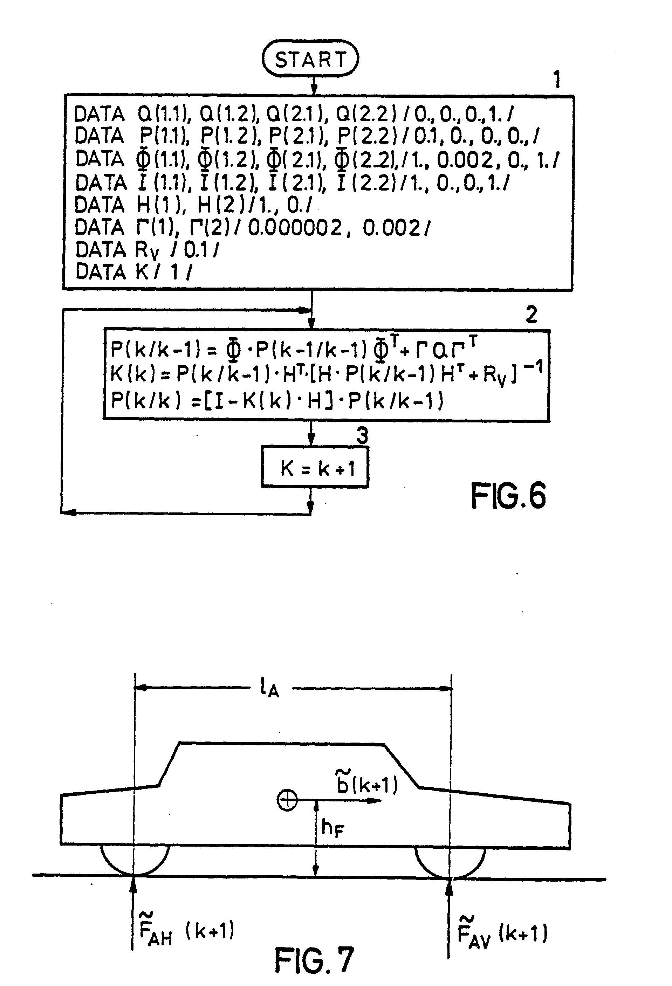

Der Kalman Verstärkungsvektor kann gespeichert sein oder während der Identifizierung ausgerechnet werden. Die Berechnung von K(K) ist in einem Flußdiagramm in Abb. 6 gegeben.

In 1 wird der Algorithmus initialisiert. In der ersten Zeile wird der Varianzmatrix der Prozesstörungen vorbesetzt. In der zweiten Zeile wird der Kovarianzmatrix vom Zustand vorbesetzt. In der 3. Zeile ist die Transitionsmatrix gegeben, und in der 4. Zeile die Identitätsmatrix. In den 5. und 6. Zeilen ist der Meßvektor bzw. der Störungstransitionsvektor $\Gamma$ angegeben.

In der 7. Zeile ist die Varianz im Meßrauschen festgelegt und in der 8. Zeile wird der Zeitzähler initialisiert. In 2 werden nacheinander die Matrix $P(K \mid K\text{-}1)$, der Kalmanverstärkungsvektor K(K) und die Matrix $P(K \mid K)$ ausgerechnet. Nach Abschluß von diesen Berechnungen wird der Zeitzähler inkrementiert (in 3) und es werden für die neue Identifizierungsschleife die Berechnungen von 2 wieder durchgeführt.

Aus dem Wert $\hat{b}(K+1)$ kann nun $\hat{F}_A(K+1)$ berechnet werden. Zu bedenken ist dabei, daß durch die Fahrzeugbeschleunigung (-verzögerung) dynamische Achslaständerungen auftreten. Für die Vorderräder gilt (Abb. 7)

$$\hat{F}_{AV}(K+1) = F_{AOV} - \tfrac{1}{2} \cdot m_F \cdot \hat{b}(K+1))h_F/1_A$$

wobei
$F_{AOV}$ die statische Radlast vorne
$m_F$ die Fahrzeugmasse
$h_F$ die Höhe vom Schwerpunkt über der Fahrbahn
$1_A$ der Achsabstand ist.
Für die Hinterräder gilt:

$$\hat{F}_{AH}(K+1) = F_{AOH} + \tfrac{1}{2} \cdot m_F \cdot \hat{b}(K+1) - h_F/1_A$$

wobei $F_{AOH}$ die statische Radlast hinten ist.

**Abschätzung von $V_R$ und $P_B$**

Das Kalman Filter für die Radgeschwindigkeit und den Bremsdruck beruht auf folgende Differentialgleichungen:

$$\dot{V}_R = - C_B \cdot P_B + M_R$$
$$\dot{M}_R = w$$
$$\dot{P}_B = C_0 \cdot (p_0(t) - P_B) + C_1 \cdot w$$

wobei $C_B$ und $C_1$ Konstanten sind und $P_0$ und $C_0$ abhängen vom Stand des Schaltventils (Abb. 1). w ist die Prozesstörung.

Die diskrete Lösung dieser Differentialgleichungen ist

$$\begin{vmatrix} V_R(K+1) \\ M_R(K+1) \\ P_B(K+1) \end{vmatrix} = \Phi \cdot \begin{vmatrix} V_R(K) \\ M_R(K) \\ P_B(K) \end{vmatrix} + \Gamma_1 \cdot P_0(K) + \Gamma_2 \cdot w(K)$$

wobei der Transitionsmatrix

$$\Phi = \begin{vmatrix} 1 & \Delta T & -\frac{C_B}{C_0}(1 - e^{-C_0 \cdot \Delta T}) \\ 0 & 1 & 0 \\ 0 & 0 & e^{-C_0 \cdot \Delta T} \end{vmatrix}$$

der Regeltransitionsvektor

$$\Gamma_1 = \begin{vmatrix} \frac{C_B}{C_0}\{1 - C_0 \cdot \Delta T - e^{-C_0 \cdot \Delta T}\} \\ 0 \\ 1 - e^{-C_0 \cdot \Delta T} \end{vmatrix}$$

und der Störungstransitionsvektor

$$\Gamma_2 = \begin{vmatrix} \frac{1}{2} \cdot \Delta T^2 + \frac{C_1 \cdot C_B}{C_0^2}\{1 - C_0 \cdot \Delta T - e^{-C_0 \cdot \Delta T}\} \\ \Delta T \\ \frac{C_1}{C_0}(1 - e^{-C_0 \cdot \Delta T}) \end{vmatrix}$$

ist.

$C_o$, $C_1$ und $C_B$ sind Konstanten, welche vorgewählte Werte haben können. Dabei ist zu bedenken, daß $C_o$ für Druckaufbau und Druckabbau eventuell unterschiedlich sein kann. Die Kalman Filterung läuft ähnlich wie beschrieben unter $V_F$ Schätzung.

Durch Messung de Radgeschwindigkeit und eventuelle des Drucks im Haupt- oder Radbremszylinder und deren Auswertung wird bei der Erfindung die gesamte Schlupfkurve im interessanten Bereich (um das Optimum) bestimmt. Die Kenntnis der Schlupfkurve ermöglicht dem Regler die Radgeschwindigkeit entsprechend wählbarer Punkte auf der Schlupfkurve zu regeln. Damit könnten Giermomente unter Kontrolle behalten werden und ein flexibler Kompromiß zwischen Bremsweg einerseits und Lenkfähigkeit und Stabilität andererseits erreicht werden.

## Patentansprüche

1. Verfahren zur Bestimmung eines optimalen Schlupfwertes $\lambda$ an wenigstens einem Rad eines Fahrzeugs zur Bremskraftregelung unter Verwendung von von der Radgeschwindigkeit $(V_R)$ und der Fahrzeuggeschwindigkeit $(V_F)$ wenigstens angenähert abhängigen Signalen $(V_R^*; V_F^*)$, dadurch gekennzeichnet,

daß während der Fahrt der Schlupf $\lambda$ durch Änderung des Bremsdrucks $p_B$ variiert wird und zu einzelnen Meßzeitpunkten $(K, K+1 \dots)$ Signalwertkombinationen $V_R^*(K)$, $V_F^*(K)$, $P_B(K)$ und $F_A^*(K)$ ermittelt werden,

daß nach Einsetzen mehrerer dieser ermittelten Signalwertkombinationen für verschiedene $\lambda$ in eine Funktion $V_R(K+1) = f[V_R(K), V_F(K), P_B(K), F_A(K)]$ mit unbekannten Koeffizienten $\alpha$ das entstehende Gleichungssystem gelöst und die Koeffizienten $\alpha$ ermittelt werden,

daß aus den Koeffizienten $\alpha_n$ Koeffizienten an ermittelt werden, die Koeffizienten einer allgemeinen Beschreibung der $\mu$-Schlupfkurve $\mu = f(V_R, V_F)$ sind, und

daß aus dem damit ermittelten augenblicklichen Verlauf der $\mu$-Schlupfkurve die Lage des optimalen Schlupfwertes $\lambda_{opt}$ ermittelt wird,

wobei $P_B(K)$ der Bremsdruck, FA(K) die Aufstandskraft und K ein Schrittzähler ist, der die um die $\Delta T$ voneinander entfernt liegenden Meß- und Rechenzeitpunkte definiert.

2. Verfahren nach Anspruch 1, dadurch gekennzeichnet, daß die Funktion $V_R(K+1)$ durch die beiden folgenden Ausdrücke gegeben ist:

$$V_R(K+1) = \alpha_1' \, V_R(K) + \alpha_2' \cdot F_A(K) \cdot \frac{V_F(K)-V_R(K)}{V_R(K)} \cdot \Delta T$$

$$+ \alpha_3' \, P_B(K) \, \frac{R \cdot \Delta T}{IR} \text{ für } \bar{s} < 0,5 \text{ und}$$

$$V_R(K+1) = \alpha_1 \cdot V_R(K) + [\alpha_2 + \alpha_3 (V_F(K)-V_R(K))] \cdot F_A(K)\Delta T + \alpha_4 \frac{V_F(K)-F_A(K)\Delta T}{V_F(K)-V_R(K)} + \alpha_5 \, P_B(K) \, \frac{R \Delta T}{IR}$$

$$\text{für } \bar{s} > 0,5 \,.$$

wobei $\alpha_1'$ - $\alpha_3'$ und $\alpha_1$ - $\alpha_5$ die zu ermittelnden Koeffizienten $\alpha_n$, R der Radius des Rads, IR sein Trägheitsmoment, $\bar{s} = \frac{\varepsilon}{\mu(1+\lambda)}$, $\varepsilon$ eine Reifenkonstante, $\mu = \mu_o (1 + A_\lambda . v_\lambda)$, $\mu_o$ der Reibbeiwert zwischen Reifen und Fahrbahn, $A_\lambda$ eine Gummikonstante und $v_\lambda = \lambda . V_F$ sind.

3. Verfahren nach Anspruch 1, dadurch gekennzeichnet, daß die Funktion $V_R(K+1)$ durch den folgenden Ausdruck gegeben ist

$$V_R(K+1) = \alpha_1 \, V_R(K) + [\alpha_2 + \alpha_3 (V_F(K) - V_R(K))] \cdot F_A(k).\Delta T$$

$$+ \frac{\alpha_4 . V_F(K)}{V_F(K) - C \cdot V_R(K)} \cdot F_A(K) \cdot \Delta T$$

$$+ \alpha_5 \, P_B(K) \, \frac{R \Delta T}{IR}$$

wobei $\alpha_1$ - $\alpha_5$ die zu ermittelnden Konstanten $\alpha_n$, R der RRadius des Rads, IR sein Trägheitsmoment und C eine Konstante (z. B. 0,98) sind.

4. Verfahren nach Anspruch 2, dadurch gekennzeichnet, daß die $\mu$-Schlupfkurve durch folgenden Ausdruck beschrieben ist

$$\mu = a_o \frac{1}{V_R} (V_F - V_R) \text{ für } \bar{s} < 0.5$$

$$\mu = a_1 + a_2 (V_F - V_R) + a_3 \frac{V_F}{V_F \cdot V_R} \text{ für } \bar{s} > 0,5.$$

5. Verfahren nach Anspruch 3, dadurch gekennzeichnet, daß die $\mu$-Schlupfkurve durch den folgenden Ausdruck für alle $\bar{s}$ beschrieben ist

$$\mu = a_1 + a_2 (V_F - V_R) + a_3 \frac{V_F}{V_F - C V_R}$$

6. Verfahren nach einem der Ansprüche 1 bis 5, dadurch gekennzeichnet, daß die Parameter $\alpha_n$ der Funktion $V_R(K+1)$ aus dem Ausdruck

$$\bar{V}_R(K+1) = \hat{V}_R(K+1) + v(K)$$

durch Minimieren der Summe der Fehlerquadrate

$$\sum_{i=1}^{K} (v_i)^2$$

= Min

gewonnen wird, wobei $\bar{V}_R(K+1)$ ein gemessener Wert, $\hat{V}_R(K+1)$ ein abgeschätzter Wert und $v(K)$ ein Approximationsfehler ist.

7. Verfahren nach einem der Ansprüche 2, 4 oder 6, dadurch gekennzeichnet, daß die Berücksichtigung des nichtlinearen Ausdrucks $V_R(K+1)$ für $\bar{s} > 0,5$ erfolgt, wenn aus dem Vergleich bestimmter Größenwerte auf das Verlassen des ungefähr linearen Bereichs $\bar{s} < 0,5$ geschlossen werden kann.

8. Verfahren nach einem der Ansprüche 1 bis 7, dadurch gekennzeichnet, daß die rauschbehafteten Meßwerte $V_R$, $V_F$, $F_A$ und $P_B$ mittels eines Kalman-Filters ermittelt werden.

9. Verfahren nach einem der Ansprüche 1 bis 7, dadurch gekennzeichnet, daß die Werte $V_F$, $F_A$ und $P_B$ wenigstens teilweise mittels eines Kalman-Filters aus dem Meßwert für $V_R$ oder dem abgeschätzten Meßwert $V_R$ abgeschätzt werden.

## Claims

1. Method of determining an ideal slip value $\lambda$ on at least one wheel of a vehicle, in order to regulate the brake force, by using signals $(V_R{}^*; V_F{}^*)$ at least approximately dependent on the wheel speed $(V_R)$ and vehicle speed $(V_F)$, characterized in that

during travelling, the slip $\lambda$ is varied by changing the brake pressure $P_B$ and signal-value combinations $V_R{}^*(K)$, $V_F{}^*(K)$, $P_B{}^*(K)$ and $F_A(K)$ are determined at individual measuring moments (K, K+1, etc.),

in that, after several of these determined signal-value combinations for different slip values $\lambda$ have been substituted in a function $V_R(K+1) = f[V_R(K), V_F(K), P_B(K), F_A(K)]$ with unknown coefficients $\alpha_n$, the equation system obtained is solved and the coefficients $\alpha_n$ are determined, in that coefficients $a_n$, which are coefficients of a general description of the $\mu$-slip curve $\mu = f(V_R, V_F)$, are determined from the coefficients $\alpha_n$,

and in that the position of the ideal slip value $\lambda$ opt is determined from the thus determined instantaneous trend of the $\mu$-slip curve, $P_B(K)$ being the brake pressure, $F_A(K)$ being the tread-contact force and K being an odometer which defines the measuring and computing moments placed at intervals from one another corresponding to $\Delta T$.

2. Method according to Claim 1, characterized in that the function $V_R(K+1)$ is given by the following two expressions:

$$V_R(K+1) = \alpha_1{}'V_R(K) + \alpha_2 2'. F_A(K) . \frac{V_F(K)-V_R(K)}{V_R(K)} . \Delta T$$

$$+ \alpha_3{}' P_B(K) \frac{R.\Delta T}{IR} \text{ for } \bar{s} < 0.5 \text{ and}$$

$$V_R(K+1) = \alpha_1 . V_R(K) + [\alpha_2 + \alpha_3 (V_F(K)- V_R(K))] . F_A(K) \Delta T + \alpha_4 \frac{V_{max}(K).\Delta T}{V_F(K)-V_R(K)} + \alpha_5 P_B(K) \frac{R.\Delta T}{IR}$$

for $\bar{s} > 0.5$

$\alpha_1 - \alpha_3$ and $\alpha_1 - \alpha_5$ being the coefficients $\alpha_n$ to be determined, R being the radius of the wheel, IR being its moment of inertia, $\bar{s} = \frac{\varepsilon}{\mu(1-\lambda)}$, $\varepsilon$ being a tyre constant, $\mu = \mu_o (1 + A\lambda.v\lambda)$, $\mu_o$ being the coefficient of friction between the tyre and the roadway, $A\lambda$ being a rubber constant, and $V\lambda = \lambda . V_F$.

3. Method according to Claim 1, characterized in that the function $V_R(K+1)$ is given by the following expression:

$$V_R(K+1) = \alpha_1 V_R(K) + [\alpha_2\alpha_3 (V_F(K)-V_R(K))].$$

$$F_A(k) . \Delta T$$

$$\frac{V_F(K)-V_R(K)}{V_F(K)-c V_R(K)} . F_A(K) . \Delta T$$

$$+ \alpha_5 P_B(K) \frac{R.\Delta T}{IR}$$

$\alpha_1$ - $\alpha_5$ being the constant $\alpha_n$ to be determined, R being the radius of the wheel, IR being its moment of inertia and C being a constant (for example, 0.98).

4. Method according to Claim 2, characterized in that the $\mu$-slip curve is described by the following expression:

$$\mu - a_0 \tfrac{1}{V_n} (V_F - V_R) \text{ for } \bar{s} < 0.5$$

$$\mu - a_1 + a_2 (V_F - V_R) + 3 \tfrac{V_r}{V_r \cdot V_n} \text{ for } \bar{s} > 0.5$$

5. Method according to Claim 3, characterized in that the $\mu$-slip curve is described for all s by the following expression:

$$u = a_1 + a_2 (V_F - V_R) + a_3 \ \tfrac{V_r}{V_r \cdot CV_n}$$

6. Method according to one of Claims 1 to 5, characterized in that the parameters $\alpha_n$ of the function $V_R(K+1)$ are obtained from the expression

$$\tilde{V}_R(K+1) = V_R(K+1) + v(K)$$

by minimizing the sum of the least squares

$$\sum_{i=1}^{K} (vi)^2 = min,$$

$\tilde{V}_R(K+1)$ being a measured value, $\hat{V}_R(K+1)$ being an estimated value, and $v$ (K) being an error of approximation.

7. Method according to one of claims 2, 4 or 6, characterized in that the non-linear expression in $V_R(K+1)$ is taken into account for $\bar{s} > 0.5$, when it can be concluded from a comparison of specific values that the approximately llinear range $\bar{s} < 0.5$ has been left.

8. Method according to one of Claims 1 to 7, characterized in that the measured values $V_R$, $V_F$, $F_A$ and $P_B$ affected by noise are determined by means of a Kalman filter.

9. Method according to one of Claims 1 to 7, characterized in that the values $V_F$, $F_A$ and $P_B$ are estimated at least partially by means of a Kalman filter from the measured value for $V_R$ or from the estimated measured value $V_R$.

**Revendications**

1. Procédé pour determiner une valeur optimale du glissement $\lambda$ d'au moins une roue d'un vehicule pour régler la force de freinage en utilisant des signaux $(V_R{}^*H)$; $(V_F{}^*)$ dépendant au moins approximativement de la vitesse $(V_R)$ de la roue et de la vitesse $(V_F)$ du véhicule, procédé caracterisé en ce que:
- Pendant le déplacement, on modifie le glissement $\lambda$ en modifiant la pression de freinage $P_B$ et on détermine des combinaisons de valeurs de signaux $V_R{}^*$ (K), $V_F{}^*$ (K), $p_B{}^*$ (K) et $F_A{}^*$ (K), en différents instants de mesure (K, K+1....),
- Après substitution de plusieurs telles combinaisons de valeurs de signaux ainsi déterminées pour plusieurs valeurs de $\lambda$ dans une fonction

$V_R$ (K+1) = f [$V_R$ (K), $V_F$ (K), $p_B$ (K), $F_A$ (K)] avec des coefficients inconnus $\alpha_n$, on résoud le système d'équations ainsi obtenu et on détermine les coefficients $\alpha_n$,
- Partant des coefficients $\alpha_n$, on déterminé des coefficients $\alpha_n$ qui sont les coefficients d'une description générale de la courbe de glissement $\mu$, ($\mu$ = f ($V_R$, $V_F$))et,
- A partir du tracé instantané ainsi déterminé de la courbe de glissement $\mu$, on détermine la position du coefficient de glissement $\lambda_{opt}$ optimum,
- $P_B$ (K) etant la pression de freinage, $F_A$ (K) étant la force d'application et K etant un compteur de pas qui définit les points de mesure et de calcul éloignés les uns des autres de $\Delta T$.

2. Procédé selon la revendication 1, caractérisé en ce que la fonction $V_R$ (K + 1) est donnée par les deux expressions suivantes:

$$V_R(K+1) = \alpha_1 V_K(K) + a_2 F_A(K) . \frac{V_F(K)-V_R(K)}{V_R(K)} . \Delta T$$

$$+ \alpha_3' p_B(K) \frac{R}{IR} \Delta T \text{ pour } \bar{s} < 0,5 \text{ et}$$

$$V_R(K+1) = \alpha_1 . V_R(K) + [\alpha_2 + \alpha_3(V_F(K) - V_R(K))] . F_A(K)\Delta T + \alpha_4 \frac{V_F(K).F_A(K).\Delta T}{V_F(K)-V_R(K)} + \alpha_5 p_B(K) \frac{R}{IR} \Delta T$$

pour $\bar{s} > 0,5$

relations dans lesquelles $\alpha_1'$ - $\alpha_3'$ et $\alpha_1$ - $\alpha_5$ sont les coefficients $\alpha_n$ qui sont à déterminer, R étant le rayon de la roue, IR le moment d'inertie, $\bar{s} = \frac{R^2}{\mu(1-\lambda)}$ $\varepsilon$ étant une constante du pneumatique, $\mu = \mu_0 (1 + A_\lambda . v_\lambda)$,

$\mu_0$ étant le coefficient de frottement entre le pneumatique et la surface de roulement, $A_\lambda$ étant une constante du caoutchouc et $v_\lambda = \lambda . V_F$

3. Procédé selon la revendication 1, caractérisé en ce que la fonction $V_K(K+1)$ est donnée par l'expression suivante:

$$V_R(K+1) = \alpha_1 V_R(K) + [\alpha_2 + \alpha_3(V_F(K) - V_R(K)] . F_A(k).\Delta T$$

$$+ \frac{\alpha_4 V_F(K)}{V_F(K)-C.V_R(K)} . F_A(K) . \Delta T$$

expression dans laquelle $\alpha 1$ - $\alpha_5$ représente les constantes $\alpha_n$ à déterminer, R étant le rayon de la roue, IR étant son moment d'inertie et C une constante (par exemple égale à 0,98).

4. Procédé selon la revendication 2, caractérisé en ce que la courbe de glissement $\mu$ est donnée par l'expression suivante:.

$$\mu = a_0 \frac{1}{V_F} (V_F - V_R) \text{ pour } \bar{s} < 0.5$$

$$\mu = a_1 + a_2 (V_F - V_R) + a_3 \frac{V_F}{V_F-V_R}$$

pour $\bar{s} > 0,5$.

5. Procédé selon la revendication 3, caractérisé en ce que la courbe de glissement $\mu$ est donnée par l'expression suivante pour toutes les valeurs de S.

$$\mu = a_1 + a_2 (V_F-V_R) + a_3 \frac{V_F}{V_F-CV_R}$$

6. Procédé selon l'une des revendications 1 à 5, caractérisé en ce que les paramètres $\alpha_n$ de la fonction $V_R(K+1)$ s'obtiennent à partir de l'expression

$$\tilde{V}_R(K+1) = \hat{V}_R(K+1) + v(K)$$

en rendant minimale la somme des carrés des erreurs

$$\sum_{i=1}^{K} (v_i)^2 = \text{Min}$$

relation dans laquelle $V_R(K+1)$ étant une valeur mesurée, $\hat{V}_R(K+1)$ étant une valeur obtenue par appréciation et $\mu(K)$ étant l'erreur d'approximation.

7. Procédé selon l'une des revendications 2 ou 4 ou 6, caractérisé en ce que l'on tient compte de 1 expression non linéaire $V_R(K+1)$ pour $\bar{s} > 0,5$ si à partir de la comparaison de certaines grandeurs on peut conclure à la sortie de la plage sensiblement linéaire $\bar{s} < 0,5$.

8. Procédé selon l'une des revendications 1 à 7, caractérisé en ce qu'on détermine les grandeurs de mesure affectées par le bruit $V_R$, $V_F$, $F_A$ et $P_B$ à l'aide d'un filtre de type Kalman.

9. Procédé selon l'une des revendications 1 à 7, caractérisé en ce qu'on évalue les valeurs $V_F$, $F_A$ et $p_B$ au moins partiellement à l'aide d'un filtre Kalman à partir de la grandeur de mesure de V ou à partir de la grandeur $V_R$ telle que évalué.

FIG.1

FIG.3

SRIF Programmablauf

$$\text{START}$$

**1** Initialisierung
DATA ALFA/1.0, 0.02, –0.0009, –0.0001, –10.0/
DATA U(1.1),···,U(5.5)/100.,100., 2000., 8000.,100./
DATA U(1.6),···,U(5.6)/100., 2., –1.8, –0.8, –2000./
DATA IR/2.2/, RR/0.3/, DT/0.002/, K/0/

**2** Einlesen von
$V_R(0), V_F(0), P_B(0), F_A(0)$

**3** Berechnung der
Elemente von $\underline{A}$

**4** Einlesen von
$V_R(k+1), V_F(k+1), P_B(k+1),$
$F_A(k+1)$

**5** Erweiterung von $\underline{A}$
$A'(b) = V_R(k+1)$

**6** Householder's Orthogonale
Dreieckstransformation der
Informationsmatrix U
CALL      NHTRI

**7** Lösen
für ALFA      N

**8** Lösung für
Parameter
ALFA (TRISOL)

**9** Nächster
Zyklus
$k = k+1$

FIG. 2

3

FIG.4

FIG.5

5

START

1

DATA  Q(1.1), Q(1.2), Q(2.1), Q(2.2) / 0., 0., 0.,1. /
DATA  P(1.1), P(1.2), P(2.1), P(2.2) / 0.1, 0., 0., 0.,/
DATA  $\Phi$(1.1), $\Phi$(1.2), $\Phi$(2.1), $\Phi$(2.2),/1., 0.002, 0., 1./
DATA  I(1.1), I(1.2), I(2.1), I(2.2)/1., 0.,0.,1./
DATA  H(1), H(2)/1., 0./
DATA  $\Gamma$(1), $\Gamma$(2)/ 0.000002, 0.002/
DATA  $R_V$ / 0.1 /
DATA  K / 1 /

2

$$P(k/k-1) = \Phi \cdot P(k-1/k-1) \Phi^T + \Gamma Q \Gamma^T$$
$$K(k) = P(k/k-1) \cdot H^T \cdot [H \cdot P(k/k-1) H^T + R_V]^{-1}$$
$$P(k/k) = [I - K(k) \cdot H] \cdot P(k/k-1)$$

3

$$K = k+1$$

## FIG.6

FIG. 7